# EUROPÄISCHE PATENTSCHRIFT

(11) **EP 0 953 546 B1**
(45) Veröffentlichungstag und Bekanntmachung des Hinweises auf die Patenterteilung: **22.09.2004**
(21) Anmeldenummer: 99106138.3
(22) Anmeldetag: 06.04.1999
(51) Int. Cl.: C02F 1/02

(54) **Verfahren zum Abbau von aromatischen Nitroverbindungen in Abwässern**
Method for decomposing nitroaromatic compounds in waste waters
Procédé pour dégrader les composés nitroaromatiques dans les eaux usées

(30) Priorität: 08.04.1998 DE 19815844
(43) Veröffentlichungstag der Anmeldung: 03.11.1999
(73) Patentinhaber: BASF AKTIENGESELLSCHAFT, 67056 Ludwigshafen (DE)
(72) Erfinder: Papkalla, Thomas Dr., 68165 Mannheim (DE); Baur, Karl Gerhard Dr., 67063 Ludwigshafen (DE); Langensiepen, Hans-Werner Dr., 67240 Bobenheim-Roxheim (DE); Mackenroth, Wolfgang Prof.Dr., 01987 Schwarzheide (DE)
(74) Vertreter: Isenbruck, Günter, Dr.

(56) Entgegenhaltungen:
- EP-A- 0 503 387

## Beschreibung

Die vorliegende Erfindung betrifft ein thermisches Verfahren zur Behandlung von Abwässern aus Anlagen zur Herstellung von aromatischen Nitroverbindungen wie Nitrobenzol, Nitrotoluolen oder Dinitrotoluolen. Das erfindungsgemäße Verfahren dient zum Abbau der in diesen Abwässern enthaltenen aromatischen Nitroverbindungen.

Das Abwasser aus Nitrierungsanlagen kann noch geringe Mengen an Nitroaromaten und Nitrohydroxyaromaten enthalten.

Bei den gängigen Behandlungsmethoden für Abwässer aus Anlagen zur Herstellung von aromatischen Nitroverbindungen wie Nitrobenzol, Nitrotoluole oder Dinitrotoluole werden vor der eigentlichen Abwasserbehandlung die im Wasser gelösten Nitroaromaten aufwendig abgetrennt.

Die Entfernung der gelösten Nitroaromaten und Nitrohydroxyaromaten erfolgt üblicherweise im sauren Milieu durch Extraktion mit einem organischen Lösungsmittel (siehe Ullmanns Enzyklopädie der technischen Chemie, 4.Auflage, Band 17, Seite 386).

In der Encyclopedia of Chemical Technology, Kirk-Othmer, Fourth Edition 1996, 1996, Vol. 17, S. 138 wird ein Extraktionsverfahren zur Abtrennung von Nitrobenzol beschrieben. Das im Abwasser bei der entsprechenden Temperatur gelöste Nitrobenzol wird durch eine mehrstufige Extraktion mit Benzol aus dem Abwasser entfernt.

Neben der mehrstufigen Extraktion wird auch eine Wasserdampfstrippung des Abwassers zur Entfernung des Nitrobenzols durchgeführt (siehe Encyclopedia of Chemical Processing and Design, Vol. 31, Seite 176, 1990).

Bei der Dinitrotoluol-Herstellung kann das Dinitrotoluol-haltige Abwasser durch eine Adsorption am Klärschlamm vom größten Teil des bei 70 °C gelösten 2,4- und 2,6-Dinitrotoluol befreit werden, anschließend durch eine biologische Vorbehandlung und anschließende Ozonisierung vorbehandelt werden, bevor das Abwasser in die zentrale Kläranlage eingeleitet wird (siehe BASF-Faltblatt: Ozonisierung, BASF Schwarzheide GmbH; März 1995).

Zum Abbau von Nitrohydroxyaromaten in Abwässern von Nitroanlagen können folgende Verfahren herangezogen werden:

In dem europäischen Patent EP 0 005 203 wird ein thermisches Verfahren zur Aufarbeitung von Nitrohydroxyaromaten enthaltenden Abwässern beschrieben. Hierbei werden die Abwässer, die die Nitrohydroxyaromaten in Form ihrer wasserlöslichen Salze enthalten, unter Luft- und Sauerstoffausschluß auf Temperaturen im Bereich von 150 bis 500 °C unter Druck erhitzt.

In dem Bericht "Herstellung von Nitrobenzol" aus "Produktionsintegrierter Umweltschutz in der chemischen Industrie", DECHEMA, GVC, SATW, S. 63 bis 64 wird ein thermisches Verfahren zur Aufarbeitung von nitrophenolhaltigen Abwässern beschrieben. Das Abwasser wird hierbei bis auf etwa 300 °C bei 120 bar erhitzt. Hierbei wird laut dieser Druckschrift der Effekt ausgenutzt, daß Nitrophenol, welches ein Nitrohydroxyaromat ist, bei hohen Temperaturen über einen Radikalmechanismus zerfällt.

Eine Reinigung oder Aufarbeitung der aromatische Nitroverbindungen enthaltenden Abwässer ist notwendig, da die aromatischen Nitroverbindungen bakterizide Eigenschaften aufweisen und somit eine biologische Reinigung des Abwassers unmöglich machen.

Mit den bislang gemäß des Standes der Technik bekannten Verfahren zur Abtrennung bzw. zum Abbau aromatischer Nitroverbindungen in Abwässern von Nitroanlagen war es nicht möglich, Nitroaromaten und Nitrohydroxyaromaten in einem einzigen Verfahren abzutrennen bzw. abzubauen.

Die Aufgabe der vorliegenden Erfindung bestand nun darin, ein Verfahren bereitzustellen, welches den Abbau von möglichst vielen verschiedenen aromatischen Nitroverbindungen in Abwässern in einem einzigen Verfahren erlaubt.

Diese Aufgabe wird durch das in den Ansprüchen beschriebene Verfahren gelöst.

Die Erfindung betrifft demnach ein Verfahren zum Abbau einer aromatischen Nitroverbindung oder eines Gemisches aus zwei oder mehr davon in Abwässern, die einen pH-Wert von 7 bis 14 aufweisen, bei dem die Abwässer auf Temperaturen von 150 bis 350°C unter einem Druck von 10 bis 300 bar erhitzt werden, wobei mindestens eine aromatische Nitroverbindung keine Hydroxygruppe am aromatischen Ring trägt.

Die Zusammensetzung der in den Abwässern enthaltenen aromatischen Nitroverbindungen hängt von den jeweils zur Nitrierung eingesetzten aromatischen Verbindungen ab.

Beispiele für solche aromatischen Nitroverbindungen sind Nitrohydroxyaromaten wie Mono-, Di- und Trinitrophenole, Mono-, Di-, Trinitrokresole, Mono-, Di- und Trinitroresorcine und Mono-, Di-, Trixylenole.

Aromatische Nitroverbindungen die keine Hydroxygruppe am aromatischen Ring sind beispielsweise Nitrobenzole, Nitrotoluole und Dinitrotoluole. Letztere sind in Wasser schlecht löslich.

Weitere spezielle aromatische Nitroverbindungen, die in den Abwässern enthalten sein können und die mit Hilfe des vorliegenden Verfahrens abgebaut werden können, sind in den Beispielen 1 bis 4 genannt.

Mit dem erfindungsgemäßen Verfahren können auch Nitroaromaten enthaltende Abwässer behandelt werden, die keine Nitrohydroxyaromaten enthalten, d.h. das erfindungsgemäße Verfahren kann zum Abbau von Nitroaromaten, die keine Hydroxygruppe am aromatischen Ring tragen, in Abwässern verwendet werden.

Der Abbaugrad der aromatischen Nitroverbindungen im Abwasser nach der Thermolyse hängt ab von den Gehalten der aromatischen Nitroverbindung im Abwasser vor der Thermolyse, der Thermolysetemperatur und der Verweilzeit.

Aus sicherheitstechnischen Gründen ist vorzugsweise darauf zu achten, daß die im Wasser schlecht löslichen Nitroaromaten keine organische Phase ausbilden. Da durch eine höhere Abwassertemperatur die Löslichkeit der Nitroaromaten zunimmt, kann dies durch das Einstellen der Abwassertemperatur verhindert werden. Der Gehalt der in Wasser schlecht löslichen Nitroverbindungen wird bevorzugt durch eine Abwassertemperatur von 40 bis 80 °C eingestellt. Die Abwässer sollten die aromatischen Nitroverbindungen also vorzugsweise in gelöster Form enthalten.

Das erfindungsgemäße Verfahren kann wie folgt durchgeführt werden:

Das Abwasser wird in Druckbehältern bei einer Temperatur von 150 °C bis 350 °C, vorzugsweise 250 °C bis 320 °C, einem Druck von 10 bar bis 300 bar, vorzugsweise 40 bar bis 250 bar und einem pH-Wert des Abwassers von 7 bis 14, vorzugsweise 10 bis 13 thermolysiert.

Das Verfahren kann kontinuierlich oder diskontinuierlich durchgeführt werden.

Als Druckbehälter können alle aus dem Stand der Technik bekannten Druckbehälter eingesetzt werden, die für die oben genannten Temperaturen und Drücke ausgelegt sind.

Für eine kontinuierliche Verfahrensführung eignen sich beispielsweise Rohrreaktoren und in Kaskade geschaltete Autoklaven.

In einer bevorzugten Ausgestaltung wird das Abwasser mit einer Pumpe durch einen Wärmetauscher gefördert, in dem es z.B. auf 280 °C vorgewärmt wird. Anschließend wird das vorgewärmte Abwasser durch Direkteinspeisung von 100 bar Dampf oder durch eine indirekte Beheizung auf 300 °C erhitzt. Nach einer Verweilzeit von 20 min bis 60 min wird die Reaktionslösung im Gegenstrom mit dem Feed abgekühlt und entspannt.

Zur kontinuierlichen Ausgestaltung des Verfahrens benutzt man vorzugsweise einen Rohrreaktor, in welchem die Strömung der Flüssigkeit so eingestellt ist, daß eine Rückvermischung unterbleibt.

Die Abwässer, die mit dem erfindungsgemäßen Verfahren behandelt werden können, stammen vorzugsweise aus Nitrierungsanlagen zur Nitrierung von aromatischen Verbindungen wie z.B. Nitrobenzolanlagen, Dinitrotoluolanlagen und Nitrotoluol- und Nitroxylolanlagen.

Mit dem erfindungsgemäßen Verfahren kann auch ein Abwassermix bestehend aus den Abwässern verschiedener Nitrierungsanlagen behandelt werden.

Das erfindungsgemäße Verfahren hat folgende Vorteile gegenüber anderen aus dem Stand der Technik bekannten Verfahren zur Abtrennung oder zum Abbau von aromatischen Nitroverbindungen aus oder in Abwässern:

Das erfindungsgemäße Verfahren ermöglicht den gleichzeitigen Abbau von aromatischen Nitroverbindungen, die keine Hydroxygruppe aufweisen, und von Nitrohydroxyaromaten in Abwässern in einem einzigen Verfahren.

Die aufwendige Abtrennung der aromatischen Nitroverbindungen, die keine Hydroxygruppe aufweisen wie Nitrobenzole, Nitrotoluole und Dinitrotoluole, durch Extraktion, Wasserdampfstrippung oder Fällung und/oder Ozonisierung, insbesondere Fällung und Ozonisierung, ist bei dem erfindungsgemäßen Verfahren nicht mehr notwendig. Dadurch werden Investitionskosten und Betriebskosten gespart.

Außerdem können mit dem erfindungsgemäßen Verfahren auch Abwässer behandelt werden, die nur aromatische Nitroverbindungen enthalten, die keine Hydroxygruppe aufweisen wie Nitrobenzole, Nitrotoluole und Dinitrotoluole.

Hierbei werden Investitionskosten gespart, da das erfindungsgemäße Verfahren apparativ einfacher ist als die aus dem Stand der Technik bekannten Verfahren wie Extraktion, Wasserdampfstrippung und Ozonisierung.

Die Abwässer, die gemäß der vorliegenden Erfindung behandelt wurden, können danach problemlos biologisch gereinigt werden. Hierbei sind Abbauraten von mindestens 90% erreichbar.

Die vorliegende Erfindung soll nunmehr anhand der folgenden Beispiele näher erläutert werden:

### Beispiele

### Beispiel 1

Im Beispiel 1 wurde ein ungestripptes Nitrobenzolabwasser, wie es aus einer Nitrobenzolproduktion ungestrippt anfällt, in einem Rohrreaktor thermolysiert. Das Abwasser hat vor der Thermolyse einen pH-Wert von 12,3.

Die Reaktionsbedingungen waren:

| | |
|---|---|
| Reaktionstemperatur | 290 °C |
| Druck | 90 bar |
| Verweilzeit | 25 min |

**Tabelle 1**

| Ergebnisse der Thermolyse eines nitrobenzolhaltigen Abwassers | | |
|---|---|---|
| **Gehalt** | **Zulauf Abwasser** | **Austrag Abwasser** |
| Pikrinsäure [ppm] (= 3,4,6-Trinitrophenol) | 1155 | 3 |
| 2,6-Dinitrophenol [ppm] | 47 | 9 |
| 2,4-Dinitrophenol [ppm] | 2545 | < 1 |
| Nitrobenzol [ppm] | 1597 | 98 |

Wie die Analyseergebnisse zeigen, wurden neben den Nitrophenolen auch das Nitrobenzol um über 90 % reduziert. Durch eine Erhöhung der Verweilzeit konnte der Nitrobenzolabbau noch weiter erhöht werden.

### Beispiel 2

Im Beispiel 2 wurde ein unbehandeltes Dinitrotoluolabwasser, wie es aus einer Dinitrotoluolproduktion anfällt, in einem Rohrreaktor thermolysiert. Das Abwasser hatte vor der Thermolyse einen pH-Wert von 13.

Die Reaktionsbedingungen waren:

| | |
|---|---|
| Reaktionstemperatur | 290 °C |
| Druck | 90 bar |
| Verweilzeit | 20 min |

**Tabelle 2**

| Ergebnisse der Thermolyse | | |
|---|---|---|
| **Gehalt** | **Zulauf Abwasser** | **Austrag Abwasser** |
| Nitrobenzol [ppm] | 162 | < 1 |
| Dinitrotoluol¹⁾ [ppm] | 390 | < 5 |
| Trinitrokresole [ppm] | 34 | < 1 |

| | | |
|---|---|---|
| 1) = Summe von 2,4- und 2,6-Dinitrotoluol, ausgewertet als 2,4-Dinitrotoluol | | |

Die Ergebnisse der Thermolyseversuche zeigen, daß ein vollständiger Abbau der Dinitrotoluole, des Nitrobenzols und der Trinitrokresole erreicht wurde.

### Beispiel 3

Im Beispiel 3 wurde ein vorbehandeltes Dinitrotoluolabwasser, bei dem durch eine Vorbehandlung die Nitrophenole entfernt worden sind, in einem Autoklaven thermolysiert. Der pH-Wert des Abwassers betrug vor der Thermolyse 7.

Die Reaktionsbedingungen waren:

| | |
|---|---|
| Reaktionstemperatur | 300 °C |
| Druck | 90 bar |
| Verweilzeit | 1 h |

**Tabelle 3**

| Gehalte der aromatischen Nitroverbindungen vor und nach der Thermolyse | | |
|---|---|---|
| **Gehalt** | **Zulauf [ppm]** | **Austrag [ppm]** |
| 2,6-Dinitrophenol [ppm] | 1 | < 1 |
| 2,4-Dinitrophenol [ppm] | < 1 | < 1 |
| 2-Nitrophenol [ppm] | < 1 | max. 2 |
| 4-Nitrophenol [ppm] | < 1 | < 1 |
| Pikrinsäure [ppm] | < 1 | < 1 |
| 2,4,6-Trinitrokresol [ppm] | 4 | < 1 |
| 2,4-Dinitrotoluol [ppm] | 360 | < 1 |
| 2,6-Dinitrotoluol [ppm] | 100 | < 1 |
| 4-Nitrotoluol [ppm] | 50 | 2 |
| 3-Nitrotoluol [ppm] | 20 | 1 |

### Beispiel 4

Im Beispiel 4 wurde ein vorbehandeltes Dinitrotoluolabwasser, bei dem durch eine Vorbehandlung die Nitrophenole entfernt worden sind, in einem Autoklaven thermolysiert. Der pH-Wert des Abwassers betrug vor der Thermolyse 10,8.

Die Reaktionsbedingungen waren:

| | |
|---|---|
| Reaktionstemperatur | 300 °C |
| Druck | 90 bar |
| Verweilzeit | 1 h |

**Tabelle 4**

| Gehalte der aromatischen Nitroverbindungen vor und nach der Thermolyse | | |
|---|---|---|
| **Gehalt** | **Zulauf [ppm]** | **Austrag [ppm]** |
| 2,6-Dinitrophenol [ppm] | 1 | < 1 |
| 2,4-Dinitrophenol [ppm] | < 1 | < 1 |
| 2-Nitrophenol [ppm] | < 1 | < 1 |
| 4-Nitrophenol [ppm] | < 1 | < 1 |
| Pikrinsäure [ppm] | < 1 | < 1 |
| 2,4,6-Trinitrokresol [ppm] | 4 | < 1 |
| 2,4-Dinitrotoluol [ppm] | 360 | 1 mg |
| 2,6-Dinitrotoluol [ppm] | 100 | < 1 |
| 4-Nitrotoluol [ppm] | 50 | 2 |
| 3-Nitrotoluol [ppm] | 20 | 1 |

In den Beispielen 3 und 4 wurden Abwässer thermolysiert, bei denen durch eine Vorbehandlung die Nitrophenole entfernt wurden. Trotz deren Entfernung konnte ein weitgehender Abbau der aromatischen Nitroverbindungen beobachtet werden. Dies zeigte, daß für den Abbau der Nitroaromaten, die keine Hydroxygruppe aufweisen, nicht die bei der Thermolyse der im Abwasser vorhandenen Nitrohydroxyaromaten entstehenden Radikale verantwortlich waren.

## Patentansprüche

1. Verfahren zum Abbau einer aromatischen Nitroverbindung oder eines Gemisches aus zwei oder mehr davon in Abwässern, die einen Ph-Wert von 7 bis 14 aufweisen, indem man die Abwässer auf Temperaturen von 150 bis 350 °C unter einem Druck von 10 bis 300 bar erhitzt; **dadurch gekennzeichnet, daß** mindestens eine aromatische Nitroverbindung keine Hydroxygruppe am aromatischen Ring trägt.

2. Verfahren nach Anspruch 1, **dadurch gekennzeichnet, daß** mindestens eine aromatische Nitroverbindung in Wasser schlecht löslich ist.

3. Verfahren nach Anspruch 2, **dadurch gekennzeichnet, daß** der Gehalt der in Wasser schlecht löslichen Nitroverbindungen durch die Abwassertemperatur von 40 bis 80 °C eingestellt wird.

4. Verfahren nach einem der vorherigen Ansprüche, **dadurch gekennzeichnet, daß** die Abwässer die aromatische(n) Nitroverbindung(en) in gelöster Form enthalten.

5. Verfahren nach einem der vorherigen Ansprüche, **dadurch gekennzeichnet, daß** die Abwässer keine Nitrohydroxyaromaten enthalten.

6. Verfahren nach einem der vorhergehenden Ansprüche, **dadurch gekennzeichnet, daß** der pH-Wert des Abwassers 10 bis 13 beträgt.

7. Verfahren nach einem der vorhergehenden Ansprüche, **dadurch gekennzeichnet, daß** die Temperatur beim Erhitzen 250 bis 320 °C beträgt.

8. Verfahren nach einem der vorhergehenden Ansprüche, **dadurch gekennzeichnet, daß** der Druck 40 bis 250 bar beträgt.

9. Verfahren nach einem der vorhergehenden Ansprüche, **dadurch gekennzeichnet, daß** die Abwässer aus Nitrierungsanlagen stammen.

10. Verwendung des in einem der vorhergehenden Ansprüche beschriebenen Verfahrens zum Abbau von aromatischen Nitroverbindungen, die keine Hydroxygruppe am aromatischen Ring tragen, in Abwässern.

## Claims

1. A process for breaking down an aromatic nitro compound or a mixture of two or more thereof in wastewaters having a pH of from 7 to 14 by heating the wastewaters to temperatures of from 150 to 350°C under a pressure of 10 to 300 bar, wherein at least one aromatic nitro compound carries no hydroxyl group on its aromatic ring.

2. A process as claimed in claim 1, wherein at least one aromatic nitro compound is of poor solubility in water.

3. A process as claimed in claim 2, wherein the amount of nitro compounds whose solubility in water is poor is adjusted by means of the wastewater temperature of from 40 to 80°C.

4. A process as claimed in any one of the preceding claims, wherein the wastewaters contain the aromatic nitro compound(s) in dissolved form.

5. A process as claimed in any one of the preceding claims, wherein the wastewaters contain no nitro-hydroxy-aromatic compounds.

6. A process as claimed in any one of the preceding claims, wherein the wastewater pH is from 10 to 13.

7. A process as claimed in any one of the preceding claims, wherein the temperature of said heating is from 250 to 320°C.

8. A process as claimed in any one of the preceding claims, wherein the pressure is from 40 to 250 bar.

9. A process as claimed in any one of the preceding claims, wherein the wastewaters originate from nitration plants.

10. The use of a process as described in any one of the preceding claims to break down aromatic nitro compounds which carry no hydroxyl group on their aromatic ring, in wastewaters.

## Revendications

1. Procédé pour dégrader un composé nitroaromatique ou un mélange de deux ou plusieurs de ceux-ci dans les eaux usées, qui présentent une valeur de pH de 7 à 14, en chauffant les eaux usées à des températures de 150 à 350°C sous une pression de 10 à 300 bars; **caractérisé en ce qu'**au moins un composé nitroaromatique ne porte pas de groupe hydroxy sur le noyau aromatique.

2. Procédé selon la revendication 1, **caractérisé en ce qu'**au moins un composé nitroaromatique est difficilement soluble dans l'eau.

3. Procédé selon la revendication 2, **caractérisé en ce que** la teneur des composés nitro difficilement solubles dans l'eau est ajustée par la température des eaux usées de 40 à 80°C.

4. Procédé selon l'une quelconque des revendications précédentes, **caractérisé en ce que** les eaux usées contiennent le ou les composés aromatiques sous forme dissoute.

5. Procédé selon l'une quelconque des revendications précédentes, **caractérisé en ce que** les eaux usées ne contiennent pas de substance nitrohydroxyaromatique.

6. Procédé selon l'une quelconque des revendications précédentes, **caractérisé en ce que** la valeur de pH des eaux usées est de 10 à 13.

7. Procédé selon l'une quelconque des revendications précédentes, **caractérisé en ce que** la température lors du chauffage est de 250 à 320°C.

8. Procédé selon l'une quelconque des revendications précédentes, **caractérisé en ce que** la pression est de 40 à 250 bars.

9. Procédé selon l'une quelconque des revendications précédentes, **caractérisé en ce que** les eaux usées proviennent d'installations de nitratation.

10. Utilisation du procédé selon l'une quelconque des revendications précédentes, pour dégrader des composés nitroaromatiques qui ne portent pas de groupe hydroxy sur le noyau aromatique dans les eaux usées.
